# EUROPEAN PATENT SPECIFICATION

(11) **EP 3 915 079 B1**
(45) Date of publication and mention of the grant of the patent: **20.08.2025**
(21) Application number: 19839218.5
(22) Date of filing: 16.12.2019
(51) Int. Cl.: G06Q 30/02, G06Q 10/00, G06Q 50/10

(54) **ADAPTIVE IN-APPLICATION MESSAGING**
ADAPTIVE APPLIKATIONSINTERNE NACHRICHTENÜBERTRAGUNG
MESSAGERIE ADAPTATIVE DANS UNE APPLICATION

(30) Priority: 22.01.2019 US 201962795504 P; 07.11.2019 US 201916677541
(43) Date of publication of application: 01.12.2021
(73) Proprietor: Apple Inc., Cupertino CA 95014 (US)
(72) Inventor: MEHLMAUER, Ryan S., Cupertino, California 95014 (US); ALSINA, Thomas, Cupertino, California 95014 (US); BLATCHFORD, Dominic, Cupertino, California 95014 (US); ROUAUX, Martin, Cupertino, California 95014 (US)
(74) Representative: COPA Copenhagen Patents
(86) International application number: PCT/US2019/066643
(87) International publication number: WO 2020/154050

(56) References cited:
- WO-A1-2015/183968
- US-A1- 2014 047 005
- US-A1- 2015 281 156
- US-A1- 2017 329 614

## Description

This application claims the benefit of priority to U.S. Provisional Patent Application No. 62/795,504, entitled "Adaptive In-Application Messaging," and filed on January 22, 2019.

### TECHNICAL FIELD

The present description relates generally to adaptive in-application messaging, including providing for adaptive in-application messaging to suggest features and/or content of an application to a user based on the user's interactions with the application.

### BACKGROUND

An application may provide for in-application messaging to users. In in-application messaging, messages can be displayed to users within the application. US 2014/047005 A1 discloses an apparatus and method for providing a streaming banner promoting one or more items/content on mobile devices. User activity information is determined based on a user interfacing with a mobile device. US 2015/281156 A1 discloses that filtering rules for incoming messages can be dynamically generated by a message management service based on patterns in the user's behavior.

### BRIEF DESCRIPTION OF THE DRAWINGS

Certain features of the subject technology are set forth in the appended claims. However, for purpose of explanation, several embodiments of the subject technology are set forth in the following figures.
FIG. 1 illustrates an example network environment for providing in-application messaging in accordance with one or more implementations.
FIG. 2 illustrates an example device that may implement a system for providing in-application messaging in accordance with one or more implementations.
FIG. 3 illustrates an example architecture of a system for in-application messaging in accordance with one or more implementations.
FIG. 4 illustrates an example process for providing in-application messaging in accordance with one or more implementations.
FIGS. 5A-5B illustrate example user interfaces for displaying an in-application message in accordance with one or more implementations.
FIG. 6 illustrates a flow diagram of an example process for providing in-application messaging in accordance with one or more implementations.
FIG. 7 illustrates a flow diagram of another example process for providing in-application messaging in accordance with one or more implementations.
FIG. 8 illustrates an example electronic system with which aspects of the subject technology may be implemented in accordance with one or more implementations.

### DETAILED DESCRIPTION

The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a thorough understanding of the subject technology. However, the subject technology is not limited to the specific details set forth herein and can be practiced using one or more other implementations. In one or more implementations, structures and components are shown in block diagram form in order to avoid obscuring the concepts of the subject technology.

As noted above, in in-application messaging, a message is displayed within an application for a user to view. For example, a user may receive an in-application message suggesting a feature and/or content of the application, for increased user engagement with the application. It may be desirable for an in-application message to be displayed at an appropriate time, when the user is more likely to engage in the suggested feature and/or content.

The subject system provides for adaptive in-application messaging in which message content and and/or rules for when to display the message content can be pre-defined (e.g., by a message administrator), so that the message can be adaptively provided to the user. Using a music streaming application as an example, an administrator may wish to provide a message suggesting the user to add music to his/her music library. The administrator may create content for the message, and may further specify rules for when the message is to be displayed within the application. For example, the rules may state that the message is to be displayed for a user who has no music in his/her library, and after that user has streamed a predefined amount of songs (e.g., eight songs).

Thus, the user's device may receive the message (e.g., to add music to his/her library), together with the rule specifying when the message is to be displayed (e.g., when the user has no songs in his/her library, and has eight streamed songs). The device may store the message and the rule in local memory, and evaluate user interaction with respect to the application. When the user activity performed with respect to the application satisfies the rule, the device may adaptively retrieve the message from memory and display the message in association with the application (e.g., as a banner or a modal window).

By virtue of allowing rules corresponding to user interaction to be pre-defined (e.g., by an administrator), it is possible to adaptively display a message to a user at a time which is appropriate and/or helpful to the user. Moreover, by storing the message in local memory (as opposed to downloading the message at the time when the condition is met), it is possible to reduce wait time when displaying the message, thereby increasing the likelihood that the user may engage in the feature and/or content suggested by the message.

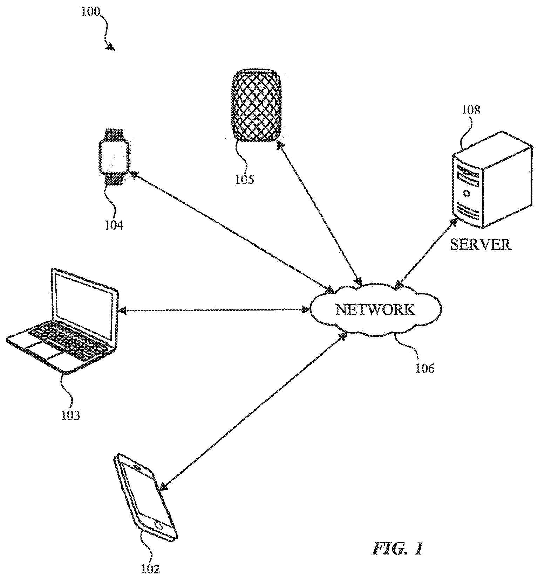

FIG. 1 illustrates an example network environment for providing in-application messaging in accordance with one or more implementations. Not all of the depicted components may be used in all implementations, however, and one or more implementations may include additional or different components than those shown in the figure. Variations in the arrangement and type of the components may be made. Additional components, different components, or fewer components may be provided.

The network environment 100 includes electronic devices 102, 103, 104 and 105 (hereinafter 102-105), a network 106 and a server 108. The network 106 may communicatively (directly or indirectly) couple, for example, any two or more of the electronic devices 102-105 and the server 108. In one or more implementations, the network 106 may be an interconnected network of devices that may include, and/or may be communicatively coupled to, the Internet. For explanatory purposes, the network environment 100 is illustrated in FIG. 1 as including electronic devices 102-105 and a single server 108; however, the network environment 100 may include any number of electronic devices and any number of servers.

One or more of the electronic devices 102-105 may be, for example, a portable computing device such as a laptop computer, a smartphone, a smart speaker, a peripheral device (e.g., a digital camera, headphones), a tablet device, a wearable device such as a smartwatch, a band, and the like, or any other appropriate device that includes, for example, one or more wireless interfaces, such as WLAN radios, cellular radios, Bluetooth radios, Zigbee radios, near field communication (NFC) radios, and/or other wireless radios. In FIG. 1, by way of example, the electronic device 102 is depicted as a smartphone, the electronic device 103 is depicted as a laptop computer, the electronic device 104 is depicted as a smartwatch, and the electronic device 105 is depicted as a smart speaker.

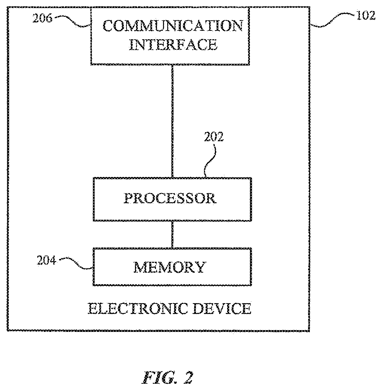

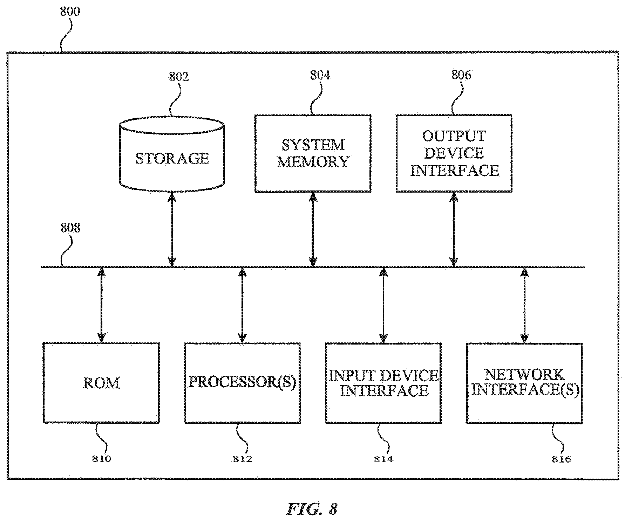

The electronic devices 102-105 may be configured to communicate or otherwise interact with the server 108, for example, to receive messages for displaying within an application, and/or rule(s) for when to display the messages. For example, the rule(s) may specify condition(s) to be satisfied prior to displaying the messages. Each of the electronic devices 102-105 may be, and/or may include all or part of, the device discussed below with respect to FIG. 2, and/or the electronic system discussed below with respect to FIG. 8.

The server 108 may be, and/or may include all or part of the electronic system discussed below with respect to FIG. 8. The server 108 may include one or more servers, such as a cloud of servers, that may be used to provide messages and/or rules for displaying the messages to one of more of the electronic devices 102-105. For explanatory purposes, a single server 108 is shown and discussed with respect to various operations. However, these and other operations discussed herein may be performed by one or more servers, and each different operation may be performed by the same or different servers.

FIG. 2 illustrates an example device that may implement a system for providing in-application messaging in accordance with one or more implementations. For explanatory purposes, FIG. 2 is primarily described herein with reference to the electronic device 102. However, FIG. 2 may correspond to any of the electronic devices 102-105 of FIG. 1. Not all of the depicted components may be used in all implementations, however, and one or more implementations may include additional or different components than those shown in the figure. Variations in the arrangement and type of the components may be made. Additional components, different components, or fewer components may be provided.

The electronic device 102 may include a processor 202, a memory 204, and a communication interface 206. The processor 202 may include suitable logic, circuitry, and/or code that enable processing data and/or controlling operations of the electronic device 102. In this regard, the processor 202 may be enabled to provide control signals to various other components of the electronic device 102. The processor 202 may also control transfers of data between various portions of the electronic device 102. Additionally, the processor 202 may enable implementation of an operating system or otherwise execute code to manage operations of the electronic device 102.

The memory 204 may include suitable logic, circuitry, and/or code that enable storage of various types of information such as received data, generated data, code, and/or configuration information. The memory 204 may include, for example, random access memory (RAM), read-only memory (ROM), flash, and/or magnetic storage.

In one or more implementations, the memory 204 may store one or more messages (e.g., received from the server 108) for displaying within respective application(s) running on the electronic device 102. The memory 204 may further store rules (e.g., received from the server 108) specifying conditions to be satisfied prior to displaying the one or more messages within the application(s).

The communication interface 206 may include suitable logic, circuitry, and/or code that enables wired or wireless communication, such as between any of the electronic devices 102-105 and the server 108 over the network 106. The communication interface 206 may include, for example, one or more of a Bluetooth communication interface, a cellular interface, an NFC interface, a Zigbee communication interface, a WLAN communication interface, a USB communication interface, or generally any communication interface.

In one or more implementations, one or more of the processor 202, the memory 204, the communication interface 206, and/or one or more portions thereof, may be implemented in software (e.g., subroutines and code), may be implemented in hardware (e.g., an Application Specific Integrated Circuit (ASIC), a Field Programmable Gate Array (FPGA), a Programmable Logic Device (PLD), a controller, a state machine, gated logic, discrete hardware components, or any other suitable devices) and/or a combination of both.

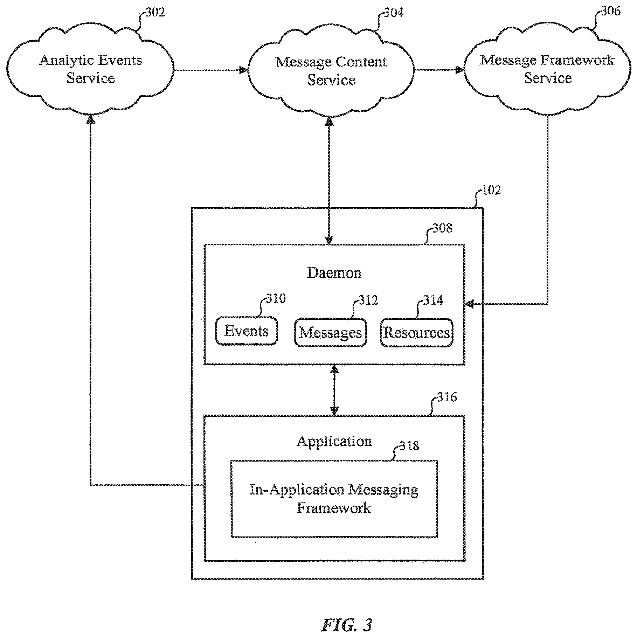

FIG. 3 illustrates an example architecture of a system for in-application messaging in accordance with one or more implementations. For explanatory purposes, FIG. 3 is primarily described herein with reference to the electronic device 102. However, FIG. 3 may correspond to any of the electronic devices 102-105 of FIG. 1. The electronic device 102 may implement a daemon 308 for storing events 310, messages 312 and resources 314. The electronic device 102 may further implement an in-application messaging framework 318 for an application 316 running on the electronic device 102. The daemon 308, the application 316 and/or the in-application messaging framework 318 may be implemented by one or more software modules running on the processor 202 of the electronic device 102. In another example, the daemon 308, the application 316 and/or the in-application messaging framework 318 can be implemented by custom hardware (e.g., one or more coprocessors) configured to execute respective functions.

Moreover, FIG. 3 illustrates an analytic events service 302, a message content service 304 and a message framework service 306 (the services 302-306). The services 302-306 may be implemented by the server 108 (e.g., such that the services 302-306 run on the same server 108) and/or by other servers (e.g., such that the services 302-306 share and/or run on different servers). Not all of the components depicted in FIG. 3 may be used in all implementations, and one or more implementations may include additional or different components than those shown in the figure. Variations in the arrangement and type of the components may be made. Additional components, different components, or fewer components may be provided.

In one or more implementations, the daemon 308 may correspond to a process (e.g., a background process) running on the electronic device 102, for storing messages 312 to be displayed within the application 316, records of events 310 associated with the respective application 316, and/or resources 314 (e.g., videos, images or other content) to obtain for displaying with the message. In one or more implementations, the events 310, the messages 312 and/or the resources 314 may be sandboxed (e.g., with respect to the application 316).

Moreover, the application 316 may include and/or otherwise interface with an in-application messaging framework 318. The in-application messaging framework 318 may be configured to evaluate the rules/conditions for displaying messages against events generated by the application 316. The in-application messaging framework 318 may further be configured to store the state of the messages 312, such that the state is maintained when the application 316 is running and not running (e.g., the state is maintained across multiple executions of the application 316). In addition, the in-application messaging framework 318 may be configured to provide views to display the various types of messages 312, and to report the events 310 back to the server 108 after the messages 312 are shown.

As shown in FIG. 3, the electronic device 102 may communicate with the analytic events service 302, the message content service 304 and the message framework service 306. The analytic events service 302 may be configured to receive and/or store indications of events (e.g., the events 310), such as user interactions within the application 316. In one or more implementations, the analytic events service 302 may receive event data from the applications of multiple devices (e.g., the electronic devices 102-105) corresponding to multiple users. User identifying information may be removed from the event data so as to maintain user anonymity and preserve user privacy. The analytic events service 302 may store the analytic events data, for providing to the message content service 304.

The message content service 304 may be configured to receive the analytic events data from the analytic events service 302, with respect to determining new rules and/or modifying existing rules that specify when messages (e.g., the messages 312) should be displayed. In one or more implementations, the rules may be defined by an administrator (e.g., a member of a business development team for the application and/or a machine learning model) who determines the conditions for when the messages should be displayed. Thus, the message content service 304 may store and/or maintain the messages (e.g., the messages 312) for sending to the electronic device 102, together with the rules specifying the conditions for displaying the messages. The message content service 304 may be configured to send the messages and/or rules to the electronic device 102, for local storage thereon. For example, the message content service 304 may provide for push notifications with respect to the messages, such that notifications of new messages and/or updates to existing messages are pushed to the electronic device 102. Alternatively or in addition, the message content service 304 may provide for message updates on a periodic basis.

The message framework service 306 may store and/or maintain one or more templates to be used when displaying respective messages. For example, the template(s) may indicate various parameters for display of message content including, but not limited to, formatting, size, style and shape of the message content (e.g., text, images). In this way, it is possible for different messages (e.g., for display within different applications) to be presented in appropriate manners within their respective applications.

In one or more implementations, one or more of the daemon 308, the application 316, the in-application messaging framework 318, the analytic events service 302, the message content service 304 and/or the message framework service 306 are implemented via software instructions, stored in memory, which when executed by respective processor(s), cause the processor(s) to perform particular function(s).

In one or more implementations, one or more of the daemon 308, the application 316, the in-application messaging framework 318, the analytic events service 302, the message content service 304 and/or the message framework service 306 may be implemented in software (e.g., subroutines and code) and/or hardware (e.g., an Application Specific Integrated Circuit (ASIC), a Field Programmable Gate Array (FPGA), a Programmable Logic Device (PLD), a controller, a state machine, gated logic, discrete hardware components, or any other suitable devices) and/or a combination of both. In one or more implementations, some or all of the depicted components may share hardware and/or circuitry, and/or one or more of the depicted components may utilize dedicated hardware and/or circuitry. Additional features and functions of these modules according to various aspects of the subject technology are further described in the present disclosure.

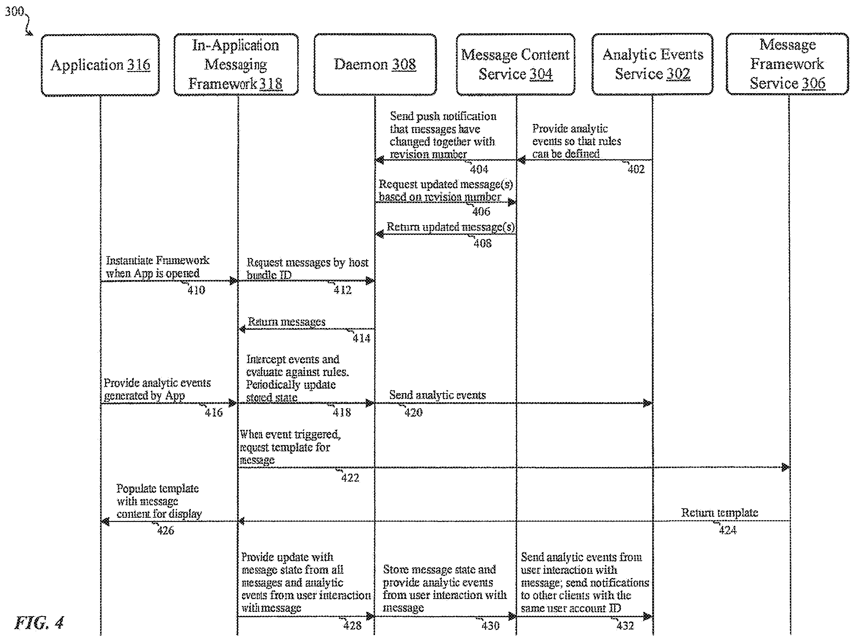

FIG. 4 illustrates an example process for providing in-application messaging in accordance with one or more implementations. For explanatory purposes, the process 400 is primarily described herein with reference to the electronic device 102 of FIG. 1. However, the process 400 is not limited to the electronic device 102 of FIG. 1, and one or more blocks (or operations) of the process 400 may be performed by one or more other components of the electronic device 102 and other suitable devices (e.g., any of the electronic devices 102-105). Further for explanatory purposes, the blocks of the process 400 are described herein as occurring in serial, or linearly. However, multiple blocks of the process 400 may occur in parallel. In addition, the blocks of the process 400 need not be performed in the order shown and/or one or more blocks of the process 400 need not be performed and/or can be replaced by other operations.

As noted above, the analytic events service 302 may receive and/or store event data (e.g., in an anonymized form) from the applications of multiple devices corresponding to multiple different users. For example, the analytic events service 302 may receive this data from respective daemons of the electronic devices. In one or more implementations, the users of the electronic devices may opt-in and/or consent to the use of the analytic data. At operation 402, the analytic events service 302 provides the analytic events data to the message content service 304.

The message content service 304 may provide for evaluation of the analytic events data (e.g., by providing a user interface to an administrator), in order to define rules specifying the conditions for displaying messages. A rule may define a number of times that a predefined user action is to be performed before displaying a given message. Alternatively or in addition, a rule may define a predetermined sequence of user actions to be performed before displaying the message. The subject system may provide for the administrator to define simple rules (e.g., a user interaction reaching a predefined count value) and/or compound rules (e.g., relating to multiple based counts, nested rules and/or predefined sequences of user interactions).

The predefined user actions may include but are not limited to, the user consuming content (e.g., streaming a song, playing a video, viewing an image, viewing an article/page, scrolling to particular portion of an article/page), adding content to a user's library (e.g., adding a song, video or image to a library), downloading and saving content (e.g., downloading and saving a song, video or image) and/or performing another type of function (e.g., with respect to content). The rules may define a number of times (e.g., X times) that a predefined action is performed, and/or a sequence of actions to be performed (e.g., performing a first action X times, a second action Y times, and a third action Z times) to trigger the display of a message.

For example, the application 316 may be an application for streaming music, and the given message may relate to suggesting that music be added to a user's library (e.g., for saving and/or cataloging music for the user). The rule may specify that the message may be displayed if the user has streamed eight songs (e.g., in full) and does not have any songs within his/her music library. On the next playback of a song, album, playlist and/or radio station, the rule may indicate that the message be displayed.

In another example, the message may relate to suggesting that a playlist be created. The rule may specify that the message be displayed if the user's playlist does not contain any songs (e.g., from a streaming catalog) or the user's library does not contain any playlists created by the user, and the library includes at least eighteen add events (e.g., songs, albums and/or playlists) from the streaming catalog. On the next playback of a song, album, playlist and/or radio station, the rule may indicate that the message be displayed.

In another example, the message may relate to suggesting that music be downloaded (e.g., saved offline). The rule may specify that the message be displayed if the user's library contains no music saved for offline playback, and the library includes at least eight add events (e.g., songs, albums and/or playlists) from the streaming catalog. On the next playback of a song, album, playlist and/or radio station, the rule may indicate that the message be displayed.

In one or more implementations, the subject system may provide for global rules that apply to all messages and/or predefined groups of messages (e.g., messages for music streaming). For example, the global rules may set a limit on the number of messages displayed to a user over a given time period (e.g., two messages per day). In this manner, a message that is ready for display (e.g., based on satisfying a first rule), but for which the displaying would violate a global rule, may be queued for display at a later time (e.g., when the time period defined by the global rule expires).

In one or more implementations, the message content service 304 may be updated to include new messages and/or rule(s). Alternatively or in addition, the message content service 304 may be updated to include changes to existing messages and/or rules (e.g., in the form of updated message content and/or changes to the rules for displaying the messages). The message content service 304 may be configured to provide a push notification for messages and rules as updates occur (e.g., new or updated messages and/or rules). Thus, at operation 404, the message content service 304 sends a push notification to the daemon 308, where the push notification indicates that one or more messages and/or rules have changed. The push notification includes a revision number (e.g., an identifier) for the message.

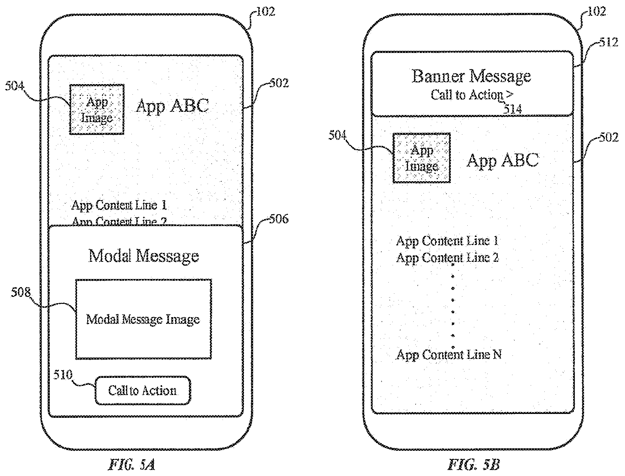

In response, the daemon 308 may send a request to the message content service 304, for the updated message(s) and/or rule(s) corresponding to the revision number (406). In response, the message content service 304 may return the updated messages and/or rules to the daemon 308 (408). The updated messages may include a parameter for message type (e.g., modal, banner and/or native, which is described below with respect to FIGS. 5A-5B).

As noted above, the daemon 308 may correspond to a process (e.g., a background process) running on the electronic device 102, for storing messages 312 to be displayed within the application 316, records of events 310 associated with the respective application 316, and/or resources 314 (e.g., videos, images or other content) to obtain for displaying with the message. Thus, in response to receiving the message update, the daemon 308 may store the update (e.g., as a new message/rule, or to replace an existing message/rule) as part of the messages 312.

At operation 410, the application 316 may instantiate the in-application messaging framework 318 (e.g., when the application is opened). As noted above, the in-application messaging framework 318 may be configured to: evaluate the rules/conditions for displaying messages against events generated by the application 316; store the state of the messages 312 (e.g., when the application is running and not running); provide views to display the various types of the messages 312; and report the events 310 back to the analytic events service 302.

At operation 412, the in-application messaging framework 318 requests the messages corresponding to the application 316 from the daemon 308. For example, a set of messages and associated rules for the application 316 may be identified by a bundle identifier. Thus, the request provided by the in-application messaging framework 318 to the daemon 308 may include the bundle identifier. In response to the request, the daemon 308 may return the messages 312 and corresponding rules for when the to display the messages (414).

While the user interacts with the application 316, the application 316 may generate analytic events (e.g., the user playing a song, the user adding a song to his/her library) corresponding to the user interaction. The application 316 may provide these analytic events to the in-application messaging framework 318 (416).

The in-application messaging framework 318 receives the events and evaluates the events against the rules (418). The in-application messaging framework 318 may also send periodic updates on the stored state of a message (e.g., a count for particular user actions) to the daemon 308. In turn, the daemon 308 may send an indication of the analytic events to the analytics events service 302 (420). The analytics events service 302 may store an indication of the analytic events, for example, for subsequent evaluation by an administrator with respect to creating and/or updating rules for triggering the display of messages.

In one or more implementations, the in-application messaging framework 318 may pre-fetch resources that were not included with the payload of a message. For example, the resources 314 may correspond to content (e.g., videos, images or other content) for display with the original message that was not included with the original message. The in-application messaging framework 318 may determine that a predefined portion (or percentage) of the rule has been satisfied (e.g., reaching a count of 6 of the 8 user action needed to trigger display of a message). Based on satisfying the predefined portion, the in-application messaging framework 318 may request the content that will be displayed with the message. By pre-fetching the content in this manner, it is possible to reduce wait time in displaying the message once the triggering event for the message occurs.

In a case where the analytic events trigger the display of the message (e.g., by reaching the predefined count and/or a sequence of user actions), the in-application messaging framework 318 may request a template for displaying the message from the message framework service 306 (422). The request may include an identifier of the message, for reference by the message framework service 306. The template(s) may indicate various parameters for display of message content including, but not limited to, formatting, size, style and shape of the message content (e.g., text, images).

The message framework service 306 returns the template for the message (424). The in-application messaging framework may populate the template with the respective message content (e.g., a suggestion for user interaction, such as adding a song to the library), based on the message type (e.g., modal, banner and/or native, discussed below with respect to FIGS. 5A-5B) for display within the application 316 (426). After being displayed, the electronic device 102 may clear the message from the messages 312 (e.g., corresponding to clearing the message from local cache).

When presented with a message (e.g., suggesting a feature or content of the application for the user to engage in), the application 316 may continue to provide analytic events corresponding to user interaction to the in-application messaging framework 318. Thus, at operations 428-432, the in-application messaging framework 318 provides update(s) of the message state from all messages and analytic events from user interaction with the message to the daemon 308 (428). The daemon 308 stores the message state and provides a report of the message state to the message content service 304 (430). The message content service 304 receives the analytic events and provides them to the analytic events service 302 (432).

In one or more implementations, the analytic events may indicate that the user proceeded with engaging in the feature and/or content suggested by the message (e.g., by adding a song to his/her library after suggested to by the message). Such interaction by the user may indicate that the message was appropriate and/or helpful for the user. On the other hand, the analytic events may indicate that the user did not proceed with engaging in the suggested feature and/or content, thereby suggesting that the message was not appropriate and/or helpful for the user.

As noted above, the analytic events service 302 may receive the analytic events (e.g., in an anonymous manner) across multiple devices of multiple users. By evaluating user interactions across multiple users, it may be possible to determine when messages are appropriate and/or helpful (e.g., based on a predetermined number and/or ratio of users engaging in the suggested features/content). An administrator may be able to delete messages, update messages and their rules and/or create new messages and/or rules based on the analytic events evaluated across the multiple users. In one or more implementations, the administrator may correspond to a machine learning model, which is updated based on analytic event data. Thus, the machine learning model may automatically delete messages, update messages and their rules and/or create new messages and/or rules based on the analytic events (e.g., across multiple users).

A user account may be associated with more than one electronic device. For example, the user may have logged into the electronic device 102 via a user account ID, and may have used the same user account ID to log into other electronic devices (e.g., one of more of the electronic devices 103-105).

In one or more implementations, message state (e.g., counts) are not synchronized across the electronic devices associated with the same user account. For example, if a user streamed a device five times at the electronic device 102 and three times at the electronic device 103, separate counts (e.g., five and three) may be maintained at each of the respective devices 102-103. Alternatively, message state (e.g., counts) may be synchronized across the electronic devices associated with the same user account (e.g., where the separate counts of five and three are added to total eight on each of the electronic devices 102-103).

In one or more implementations, in receiving the message at the electronic device 102 (426), it may be redundant and/or undesirable for the user to receive the same message at one of the other electronic devices logged into the same user account. At operation 432, the message content service 304 may send a notification (e.g., a push notification) that causes the message to not be displayed on the other electronic devices of the user. For example, the message content service 304 may provide an update which deletes the message as stored locally on the other electronic devices (e.g., by clearing the message from cache), and/or which modifies the rule to indicate that the message is not to be displayed. The other electronic devices may receive the update, such that the message will no longer be displayed at the other electronic devices.

The subject system provides that in-application messages may be controlled by a series of commands. The commands may be sequential in nature and prepare the various message capable applications to activate or deactivate banners of various shapes and sizes at pre-defined on-screen locations.

Commands may be delivered by pushes (e.g., silent pushes) to push-capable platforms or they may be polled by platforms lacking this support. In one or more implementations, client devices may be expected to maintain state both in terms of the specific banners activated and the serial number of the last command received. Where state is lost or corrupted, a client my drop all active banners and request to be brought back up to date with the expected state.

One or more services may be provided to verify the latest command serial number, and/or to fill in any gaps when the server state is different from the client state or, indeed, if the client is explicitly re-building state from scratch.

In one or more implementations, commands may not cause focus to switch within applications or for applications to be launched. Rather, they may simply indicate what optional banners will be displayed in pre-defined positions if a user naturally arrives at that destination.

Tables 1 and 2 below describe examples of command content that may be used in association with in-application messaging as described herein. For example, each command may include the fields shown in Table 1.

**Table 1**

| **Field** | **Type** | **Purpose** |
|---|---|---|
| Command Serial Number | Long Integer | To uniquely identify (and sequence) the command |
| Application Bundle Id | String | The application to which this command relates |
| Target | String | The unique name of the banner location within the application. |
| | | Examples supported for banners: |
| | | • for_use_tab |
| | | • browse_tab |
| | | • radio_tab |
| | | Examples for full-screen pages: |
| | | • welcome_page to describe the full-screen splash page the user gets next time she launches the app |
| | | • landing_page. <id> to describe a full-screen landing page the user gets next time she launches the app via a specific deep link referencing <id> |
| Command | String ADD \| REMOVE \| RESTORE \| REMOVE_ALL | To add a new banner or to remove an existing one. |
| | | For Add, addition of an existing banner may be considered an upsert removal of a non-existent banner. |
| | | For Restore, the restore command may indicate that the client should clear all banners and initiate a restore (e.g., due to unexpected operational issues and/or upgrades) |
| Banner Id | String | The unique id of the in-application message |
| Payload | String | The payload of the banner, null for REMOVE/RESTORE commands |
| | JavaScript Object Notation (JSON) | |

Moreover, the payload may include the fields shown in Table 2.

**Table 2**

| **Field** | **Type** | **Purpose** |
|---|---|---|
| Type | String PRIORITY \| CAROUSEL | Describes how the application may select which banner to show when several are available for a specific location |
| | | For Priority, the single message of the highest priority may be displayed while in use. |
| | | For Carousel, the banner may be selected round-robin from the set |
| Priority | Integer 1..10 | Used to define priority for Priority type banners. |
| | | This does not apply for Carousel messages |
| Not Before | Timestamp (UTC) | The time from which this banner may be shown |
| Not After | Timestamp (UTC) | The time at which this banner may no longer be shown |
| Max Use | Integer | The maximum number of times that this banner may be shown |
| Template | String (URL) | A reference to a (e.g., highly cacheable) template that may be used as a template for this banner |
| Parameters | Map | A set of key-value pairs with which to populate the Template |

With respect to above Tables 1 and 2, in one or more implementations: the client may be required to honor the various usage instructions, maintain counts of banner usage and the like; carousel and priority banners may not be mixed; the whole banner location should honor the usage instructions of the most recently received command for that location; the template may typically exist in-cache on-device and be re-used extensively across banners; the parameters supplied may vary according to template, but will typically include wording (e.g., language-based words), links, changes to color or style and/or references to image resources; where a template expects more parameters than are supplied, the client should may consider the banner corrupt and discard it.

In one or more implementations, the combined use of shared templates and (e.g., if applicable) silent pushes may be intended to result in a situation whereby the client is able to render new banners purely from client held data and not require a new server round-trip.

In one or more implementations, example services may include: serial check - returns the current command serial number so the client can determine whether it is up to date (e.g., this data may be appended to an existing service so as not to necessitate additional round trips in the case of push-capable clients); update (form version number) - fills in all the missing commands (e.g., adds and removes) since the supplied serial number; reset - returns all add commands necessary to restore a blank client to latest state.

In one or more implementations, a client may elect to restore fully periodically as a safeguard against server drift. The client may also be expected to (e.g., fully) restore to do so by a command. Templates and images may be treated as static resources and subject to content delivery network (CDN) caches.

FIGS. 5A-5B illustrate example user interfaces for displaying an in-application message in accordance with one or more implementations. For explanatory purposes, FIGS. 5A-5B are primarily described herein with reference to the electronic device 102. However, FIGS. 5A-5B may correspond to any of the electronic devices 102-105 of FIG. 1.

As noted above, the message may have a message type corresponding to modal, banner and/or native, for example. FIG. 5A illustrates an example user interface in which an in-application message is a modal message 506. In one or more implementations, the modal message 506 is a message that disables a main window 502 of an application (e.g., the application 316). In the example of FIG. 5A, the modal message 506 disables the main window 502 of an application "App ABC" while displayed. The main window 502 may include image data (e.g., app image 504) and/or other application content (e.g., app content lines 1-N). Although disabled by display of the modal message 506, the main window 502 may be visible in the background.

The modal message 506 may include image data (e.g., a modal message image 508) and/or other message content. The modal message 506 may be displayed in a partial screen mode or a full screen mode. Moreover, the modal message 506 may require user interaction before enabling the main window 502 of the application, for example, by requiring the user to click the call to action button 510. For example, the call to action button 510 may correspond to a link/button for navigating to additional content (e.g., by redirecting to another application and/or website). In another example, the call to action button 510 may correspond to a cancel/close button which deletes the modal message 506 and enables the main window 502.

On the other hand, FIG. 5B illustrates an example user interface in which an in-application message is a banner message 512. In one or more implementations, the banner message 512 is rectangular graphic that stretches across the top, bottom or sides of another window, and may scroll with the content of the other window. In the example of FIG. 5B, the banner message 512 stretches along the top of the main window 502. The banner message 512 may include image data and/or message content. The banner message 512 may not disable the main window 502, but may include a call to action component 514 (e.g., for redirecting to another application and/or website, or cancelling/closing the banner message 512).

Of course, other types of message types may be applied to the in-application messages described herein. For example, the message type of "native" may be used to create a customized version of the modal and/or banner type messages described above. Alternatively or in addition, the native message type may be used to designate and/or otherwise modify a message type such as, but not limited to: a pop-up message (e.g., a notification which persists until the user explicitly selects to close the message), a popover message (e.g., hover content) and/or a lightbox message (e.g., content which is enlarged or otherwise given focus relative to other content).

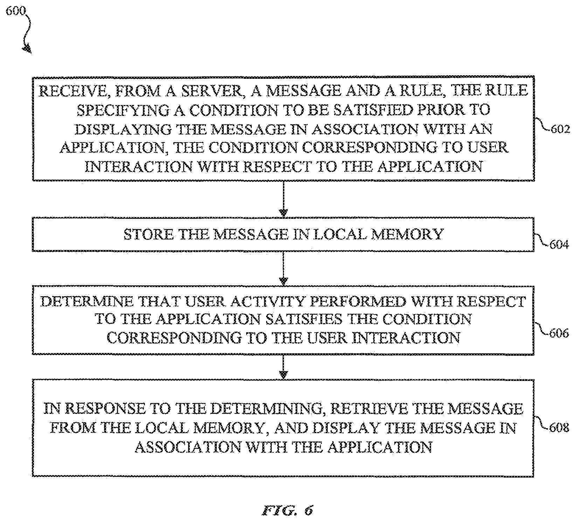

FIG. 6 illustrates a flow diagram of an example process for providing in-application messaging in accordance with one or more implementations. For explanatory purposes, the process 600 is primarily described herein with reference to the electronic device 102 and the server 108 of FIG. 1. However, the process 600 is not limited to the electronic device 102 and the server 108 of FIG. 1, and one or more blocks (or operations) of the process 600 may be performed by one or more other components of the server 108 and other suitable devices (e.g., any of the electronic devices 102-105). Further for explanatory purposes, the blocks of the process 600 are described herein as occurring in serial, or linearly. However, multiple blocks of the process 600 may occur in parallel. In addition, the blocks of the process 600 need not be performed in the order shown and/or one or more blocks of the process 600 need not be performed and/or can be replaced by other operations.

The electronic device 102 receives, from the server 108, a message and a rule (602). The rule specifies a condition to be satisfied prior to displaying the message in association with an application. The condition corresponds to user interaction with respect to the application.

The condition may correspond to a number of times that a predefined user action is to be performed before displaying the message. The electronic device 102 may maintain a count of the number of times the predefined user action has been performed. The count may be maintained when the application is running and not running (e.g., the count is maintained across multiple executions of the application). Alternatively or in addition, the condition may correspond to a predetermined sequence of user actions to be performed (e.g., performing a first action X times, a second action Y times, and/or a third action Z times) before displaying the message.

The electronic device 102 stores the message in local memory (604). The electronic device 102 determines that user activity performed with respect to the application satisfies the condition corresponding to the user interaction (606). The message may relate to suggesting a feature or content of the application for a user of the application to engage in, the feature or content relating to the user activity.

Prior to this determination, the electronic device 102 may request content associated with the message based on a determination that the user activity has satisfied a predefined portion of the condition corresponding to the user interaction, and receive the content based on the request.

In response to the determining, the electronic device 102 retrieves the message from the local memory, and displays the message (e.g., and the above-mentioned content associated with the message, if applicable) in association with the application (608). The message may be displayed as at least one of a banner, a window or in full screen.

The retrieving and the displaying may further be in response to a determination that a second rule is satisfied, the second rule being independent of the user activity. For example, the second rule may set a limit on a number of messages to display with respect to the application over a given time period.

The electronic device 102 may send, to the server 108, an indication of the user activity performed with respect to the application, for server-side evaluation in determining a second rule specifying a second condition to be satisfied before displaying a second message in association with the application, the second condition corresponding to second user interaction with respect to the application.

The first electronic device 102 may be associated with a user account. The electronic device 102 may clear a cache on the first electronic device 102 with respect to the user activity, and send, to the server 108, a notification for notifying one or more second electronic devices (e.g., one or more of the electronic devices 103-105) associated with the user account to clear their respective caches with respect to the user activity.

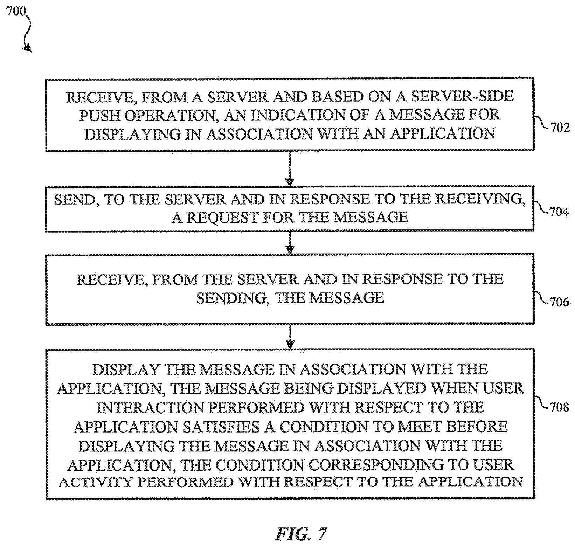

FIG. 7 illustrates a flow diagram of another example process for providing in-application messaging in accordance with one or more implementations. For explanatory purposes, the process 700 is primarily described herein with reference to the electronic device 102 and the server 108 of FIG. 1. However, the process 700 is not limited to the electronic device 102 and the server 108 of FIG. 1, and one or more blocks (or operations) of the process 700 may be performed by one or more other components of the server 108 and other suitable devices (e.g., any of the electronic devices 102-105). Further for explanatory purposes, the blocks of the process 700 are described herein as occurring in serial, or linearly. However, multiple blocks of the process 700 may occur in parallel. In addition, the blocks of the process 700 need not be performed in the order shown and/or one or more blocks of the process 700 need not be performed and/or can be replaced by other operations.

The electronic device 102 receives, from a server 108 and based on a server-side push operation, an indication of a message for displaying in association with an application (702). The message may correspond to an update to a prior message, or may correspond to a new message.

The electronic device 102 sends, to the server 108 and in response to the receiving, a request for the message (704). The electronic device 102 receives, from the server 108 and in response to the sending, the message (706).

The electronic device 102 displays the message in association with the application (708). The message is displayed when user interaction performed with respect to the application satisfies a pre-determined condition. The message may relate to suggesting a feature or content of the application for a user of the application to engage in, the feature or content relating to the user activity.

The condition may correspond to a number of times that a predefined user action is to be performed before displaying the message. Alternatively or in addition, the condition may correspond to a predetermined sequence of user actions to be performed before displaying the message.

The condition may be specified by a first rule received from the server 108. The message may be displayed in response to a determination that a second rule is satisfied, the second rule being different than the first rule and independent of the user activity.

As described above, one aspect of the present technology is the gathering and use of data available from specific and legitimate sources for in-application messaging. The present disclosure contemplates that in some instances, this gathered data may include personal information data that uniquely identifies or can be used to identify a specific person. Such personal information data can include demographic data, location-based data, online identifiers, telephone numbers, email addresses, home addresses, data or records relating to a user's health or level of fitness (e.g., vital signs measurements, medication information, exercise information), date of birth, or any other personal information.

The present disclosure recognizes that the use of such personal information data, in the present technology, can be used to the benefit of users. For example, the personal information data can be used for in-application messaging. Accordingly, use of such personal information data may facilitate transactions (e.g., on-line transactions). Further, other uses for personal information data that benefit the user are also contemplated by the present disclosure. For instance, health and fitness data may be used, in accordance with the user's preferences to provide insights into their general wellness, or may be used as positive feedback to individuals using technology to pursue wellness goals.

The present disclosure contemplates that those entities responsible for the collection, analysis, disclosure, transfer, storage, or other use of such personal information data will comply with well-established privacy policies and/or privacy practices. In particular, such entities would be expected to implement and consistently apply privacy practices that are generally recognized as meeting or exceeding industry or governmental requirements for maintaining the privacy of users. Such information regarding the use of personal data should be prominently and easily accessible by users, and should be updated as the collection and/or use of data changes. Personal information from users should be collected for legitimate uses only. Further, such collection/sharing should occur only after receiving the consent of the users or other legitimate basis specified in applicable law. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations which may serve to impose a higher standard. For instance, in the US, collection of or access to certain health data may be governed by federal and/or state laws, such as the Health Insurance Portability and Accountability Act (HIPAA); whereas health data in other countries may be subject to other regulations and policies and should be handled accordingly.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of in-application messaging, the present technology can be configured to allow users to select to "opt in" or "opt out" of participation in the collection of personal information data during registration for services or anytime thereafter. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing identifiers, controlling the amount or specificity of data stored (e.g., collecting location data at city level rather than at an address level), controlling how data is stored (e.g., aggregating data across users), and/or other methods such as differential privacy.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data.

FIG. 8 illustrates an electronic system 800 with which one or more implementations of the subject technology may be implemented. The electronic system 800 can be, and/or can be a part of, one or more of the electronic devices 102-105, and/or one or the server 108 shown in FIG. 1. The electronic system 800 may include various types of computer readable media and interfaces for various other types of computer readable media. The electronic system 800 includes a bus 808, one or more processing unit(s) 812, a system memory 804 (and/or buffer), a ROM 810, a permanent storage device 802, an input device interface 814, an output device interface 806, and one or more network interfaces 816, or subsets and variations thereof.

The bus 808 collectively represents all system, peripheral, and chipset buses that communicatively connect the numerous internal devices of the electronic system 800. In one or more implementations, the bus 808 communicatively connects the one or more processing unit(s) 812 with the ROM 810, the system memory 804, and the permanent storage device 802. From these various memory units, the one or more processing unit(s) 812 retrieves instructions to execute and data to process in order to execute the processes of the subject disclosure. The one or more processing unit(s) 812 can be a single processor or a multi-core processor in different implementations.

The ROM 810 stores static data and instructions that are needed by the one or more processing unit(s) 812 and other modules of the electronic system 800. The permanent storage device 802, on the other hand, may be a read-and-write memory device. The permanent storage device 802 may be a non-volatile memory unit that stores instructions and data even when the electronic system 800 is off. In one or more implementations, a mass-storage device (such as a magnetic or optical disk and its corresponding disk drive) may be used as the permanent storage device 802.

In one or more implementations, a removable storage device (such as a floppy disk, flash drive, and its corresponding disk drive) may be used as the permanent storage device 802. Like the permanent storage device 802, the system memory 804 may be a read-and-write memory device. However, unlike the permanent storage device 802, the system memory 804 may be a volatile read-and-write memory, such as random access memory. The system memory 804 may store any of the instructions and data that one or more processing unit(s) 812 may need at runtime. In one or more implementations, the processes of the subject disclosure are stored in the system memory 804, the permanent storage device 802, and/or the ROM 810. From these various memory units, the one or more processing unit(s) 812 retrieves instructions to execute and data to process in order to execute the processes of one or more implementations.

The bus 808 also connects to the input and output device interfaces 814 and 806. The input device interface 814 enables a user to communicate information and select commands to the electronic system 800. Input devices that may be used with the input device interface 814 may include, for example, alphanumeric keyboards and pointing devices (also called "cursor control devices"). The output device interface 806 may enable, for example, the display of images generated by electronic system 800. Output devices that may be used with the output device interface 806 may include, for example, printers and display devices, such as a liquid crystal display (LCD), a light emitting diode (LED) display, an organic light emitting diode (OLED) display, a flexible display, a flat panel display, a solid state display, a projector, or any other device for outputting information. One or more implementations may include devices that function as both input and output devices, such as a touchscreen. In these implementations, feedback provided to the user can be any form of sensory feedback, such as visual feedback, auditory feedback, or tactile feedback; and input from the user can be received in any form, including acoustic, speech, or tactile input.

Finally, as shown in FIG. 8, the bus 808 also couples the electronic system 800 to one or more networks and/or to one or more network nodes, such as the server 108 shown in FIG. 1, through the one or more network interface(s) 816. In this manner, the electronic system 800 can be a part of a network of computers (such as a LAN, a wide area network ("WAN"), or an Intranet, or a network of networks, such as the Internet. Any or all components of the electronic system 800 can be used in conjunction with the subject disclosure.

Implementations within the scope of the present disclosure can be partially or entirely realized using a tangible computer-readable storage medium (or multiple tangible computer-readable storage media of one or more types) encoding one or more instructions. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM. The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In one or more implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

While the above discussion primarily refers to microprocessor or multi-core processors that execute software, one or more implementations are performed by one or more integrated circuits, such as ASICs or FPGAs. In one or more implementations, such integrated circuits execute instructions that are stored on the circuit itself.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way) all without departing from the scope of the subject technology.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In one or more implementations, multitasking and parallel processing may be advantageous. Moreover, the separation of various system components in the implementations described above should not be understood as requiring such separation in all implementations, and it should be understood that the described program components and systems can generally be integrated together in a single software product or packaged into multiple software products.

As used in this specification and any claims of this application, the terms "base station", "receiver", "computer", "server", "processor", and "memory" all refer to electronic or other technological devices. These terms exclude people or groups of people. For the purposes of the specification, the terms "display" or "displaying" means displaying on an electronic device.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The predicate words "configured to", "operable to", and "programmed to" do not imply any particular tangible or intangible modification of a subject, but, rather, are intended to be used interchangeably. In one or more implementations, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

Phrases such as an aspect, the aspect, another aspect, some aspects, one or more aspects, an implementation, the implementation, another implementation, some implementations, one or more implementations, an embodiment, the embodiment, another embodiment, some implementations, one or more implementations, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "exemplary" is used herein to mean "serving as an example, instance, or illustration". Any embodiment described herein as "exemplary" or as an "example" is not necessarily to be construed as preferred or advantageous over other implementations. Furthermore, to the extent that the term "include", "have", or the like is used in the description or the claims, such term is intended to be inclusive in a manner similar to the term "comprise" as "comprise" is interpreted when employed as a transitional word in a claim.

The previous description is provided to enable any person skilled in the art to practice the various aspects described herein. Various modifications to these aspects will be readily apparent to those skilled in the art, and the generic principles defined herein may be applied to other aspects.

## Claims

1. A method (600), comprising:
receiving (602), at a device from a server, a message and a rule, the rule specifying a condition to be satisfied prior to displaying the message in association with an application at the device, the condition corresponding to a number of times that a predefined user action is to be performed with respect to the application before displaying the message and the device being associated with a user account;
storing (604) the message in local memory of the device;
receiving, by the device, user input to the application, the user input corresponding to the predefined user action performed with respect to the application;
synchronizing, with another device associated with the user account and having received the message and/or the rule, a count of the number of times that the predefined user action has been performed with respect to the application on the device and at the other device;
determining (606), by the device and based on the synchronizing, that the number of times that the predefined user action has been performed with respect to the application on the device and at the other device satisfies the condition; and
in response (608) to the determining,
retrieving the message from the local memory of the device, and
displaying, at the device, the message in association with the application; and after the displaying,
clearing the message from the local memory of the device, and
sending, to the server, an indication that the message has been displayed at the device,
after sending the indication to the server, the server sends a notification to the other device associated with the user account to: (i) delete the message when stored locally on the other device, and/or (ii) modify the rule to indicate that the message is not to be displayed on the other device.

2. The method of claim 1, further comprising maintaining the count of the number of times the predefined user action has been performed across multiple executions of the application.

3. The method of claim 1, wherein the condition further includes a predetermined sequence of user actions to be performed before displaying the message.

4. The method of claim 1, wherein the message relates to suggesting a feature or content of the application for a user of the application to engage in, the feature or content relating to the predefined user action.

5. The method of claim 1, wherein the retrieving and the displaying are further in response to a determination that a second rule is satisfied, the second rule being independent of the predefined user action.

6. The method of claim 5, wherein the second rule sets a limit on a number of messages to display with respect to the application over a given time period.

7. The method of claim 1, further comprising:
sending, to the server, an indication of the predefined user action performed with respect to the application, for server-side evaluation in determining a second rule specifying a second condition to be satisfied before displaying a second message in association with the application, the second condition corresponding to second user interaction with respect to the application.

8. The method of claim 1, further comprising:
requesting content associated with the message based on a determination that the predefined user action performed with respect to the application has satisfied a predefined portion of the condition corresponding to the user interaction; and
receiving the content based on the request.

9. The method of claim 1, wherein the message is displayed as at least one of a banner, a window or in full screen.

10. A device, comprising:
at least one processor; and
a memory including instructions that, when executed by the at least one processor, cause the at least one processor to perform the method of any of claims 1-9.

11. The device of claim 10, wherein the message corresponds to a new message or an update to a prior message.

12. The device of claim 10, wherein the instructions, when executed by the at least one processor further cause the at least one processor to, prior to receiving the message and the rule:
receive, from the server and based on a server-side push operation, an indication of the message;
send, to the server and in response to the indication, a request for the message.

13. A computer program product comprising code, stored in a non-transitory computer-readable storage medium, the code comprising code to perform the method of any of claims 1-9.

## Patentansprüche

1. Verfahren (600), umfassend:
Empfangen (602), an einer Vorrichtung von einem Server, einer Nachricht und einer Regel, wobei die Regel eine Bedingung spezifiziert, die erfüllt werden muss, bevor die Nachricht in Verbindung mit einer Anwendung an der Vorrichtung angezeigt wird, wobei die Bedingung einer Anzahl von Malen entspricht, die eine vordefinierte Benutzeraktion in Bezug auf die Anwendung durchgeführt werden muss, bevor die Nachricht angezeigt wird und die Vorrichtung mit einem Benutzerkonto verknüpft wird;
Speichern (604) der Nachricht in lokalem Speicher der Vorrichtung;
Empfangen einer Benutzereingabe für die Anwendung durch die Vorrichtung, wobei die Benutzereingabe der vordefinierten Benutzeraktion entspricht, die in Bezug auf die Anwendung durchgeführt wird;
Synchronisieren, mit einer anderen Vorrichtung, die mit dem Benutzerkonto verknüpft ist und die Nachricht und/oder die Regel empfangen hat, einer Zählung der Anzahl von Malen, welche die vordefinierte Benutzeraktion in Bezug auf die Anwendung auf der Vorrichtung und auf der anderen Vorrichtung durchgeführt wurde;
Bestimmen (606), durch die Vorrichtung und basierend auf dem Synchronisieren, dass die Anzahl der Male, welche die vordefinierte Benutzeraktion in Bezug auf die Anwendung auf der Vorrichtung und bei der anderen Vorrichtung ausgeführt wurde, die Bedingung erfüllt; und
als Reaktion (608) auf das Bestimmen,
Abrufen der Nachricht aus dem lokalen Speicher der Vorrichtung, und
Anzeigen der Nachricht an der Vorrichtung in Verbindung mit der Anwendung; und nach dem Anzeigen,
Löschen der Nachricht aus dem lokalen Speicher der Vorrichtung, und
Senden einer Angabe an den Server, dass die Nachricht auf der Vorrichtung angezeigt wurde,
nach dem Senden der Angabe an den Server sendet der Server eine Benachrichtigung an die andere Vorrichtung, die mit dem Benutzerkonto verknüpft ist zum: (i) Löschen der Nachricht, wenn sie lokal auf der anderen Vorrichtung gespeichert ist, und/oder (ii) Ändern der Regel, um anzuzeigen, dass die Nachricht auf der anderen Vorrichtung nicht angezeigt werden soll.

2. Verfahren nach Anspruch 1, ferner umfassend das Aufrechterhalten der Zählung, wie oft die vordefinierte Benutzeraktion über mehrere Ausführungen der Anwendung hinweg durchgeführt wurde.

3. Verfahren nach Anspruch 1, wobei die Bedingung ferner eine vorbestimmte Abfolge von Benutzeraktionen umfasst, die vor dem Anzeigen der Nachricht durchzuführen sind.

4. Verfahren nach Anspruch 1, wobei sich die Nachricht darauf bezieht, einem Benutzer der Anwendung eine Funktion oder einen Inhalt der Anwendung vorzuschlagen, wobei sich die Funktion oder der Inhalt auf die vordefinierte Benutzeraktion bezieht.

5. Verfahren nach Anspruch 1, wobei das Abrufen und Anzeigen ferner als Reaktion auf eine Bestimmung erfolgt, dass eine zweite Regel erfüllt ist, wobei die zweite Regel unabhängig von der vordefinierten Benutzeraktion ist.

6. Verfahren nach Anspruch 5, wobei die zweite Regel eine Grenze für eine Anzahl von Nachrichten setzt, die in Bezug auf die Anwendung über einen bestimmten Zeitraum angezeigt werden sollen.

7. Verfahren nach Anspruch 1, ferner umfassend:
Senden, an den Server, einer Angabe der vordefinierten Benutzeraktion, die in Bezug auf die Anwendung durchgeführt wurde, zur serverseitigen Auswertung beim Bestimmen einer zweiten Regel, die eine zweite Bedingung spezifiziert, die erfüllt sein muss, bevor eine zweite Nachricht in Verbindung mit der Anwendung angezeigt wird, wobei die zweite Bedingung einer zweiten Benutzerinteraktion in Bezug auf die Anwendung entspricht.

8. Verfahren nach Anspruch 1, ferner umfassend:
Anfordern von mit der Nachricht verknüpftem Inhalt basierend auf einer Bestimmung, dass die vordefinierte Benutzeraktion, die in Bezug auf die Anwendung durchgeführt wurde, einen vordefinierten Abschnitt der Bedingung erfüllt hat, die der Benutzerinteraktion entspricht; und
Empfangen des Inhalts basierend auf der Anforderung.

9. Verfahren nach Anspruch 1, wobei die Nachricht als mindestens eines von einem Banner, einem Fenster oder als Vollbild angezeigt wird.

10. Vorrichtung, umfassend:
mindestens einen Prozessor; und
einen Speicher, der Anweisungen einschließt, die, wenn sie durch den mindestens einen Prozessor ausgeführt werden, den mindestens einen Prozessor veranlassen, das Verfahren nach einem der Ansprüche 1 bis 9 durchzuführen.

11. Vorrichtung nach Anspruch 10, wobei die Nachricht einer neuen Nachricht oder einer Aktualisierung einer früheren Nachricht entspricht.

12. Vorrichtung nach Anspruch 10, wobei die Anweisungen, wenn sie von dem mindestens einen Prozessor ausgeführt werden, den mindestens einen Prozessor ferner vor dem Empfangen der Nachricht und der Regel veranlassen zum:
Empfangen, von dem Server und basierend auf einem serverseitigen Push-Vorgang, einer Angabe der Nachricht;
Senden, an den Server und als Reaktion auf die Angabe, einer Anfrage für die Nachricht.

13. Computerprogrammprodukt, umfassend Code, der in einem nichtflüchtigen computerlesbaren Speichermedium gespeichert ist, der Code umfassend Code, um das Verfahren nach einem der Ansprüche 1 bis 9 durchzuführen.

## Revendications

1. Procédé (600), comprenant :
la réception (602), au niveau d'un dispositif en provenance d'un serveur, d'un message et d'une règle, la règle spécifiant une condition à respecter avant l'affichage du message en association avec une application au niveau du dispositif, la condition correspondant à un nombre de fois qu'une action d'utilisateur prédéfinie doit être mise en œuvre par rapport à l'application avant l'affichage du message et le dispositif étant associé à un compte d'utilisateur ;
le stockage (604) du message dans mémoire locale du dispositif ;
la réception, par le dispositif, d'une entrée utilisateur dans l'application, l'entrée utilisateur correspondant à l'action d'utilisateur prédéfinie mise en œuvre par rapport à l'application ;
la synchronisation, avec un autre dispositif associé au compte d'utilisateur et ayant reçu le message et/ou la règle, d'un comptage du nombre de fois que l'action d'utilisateur prédéfinie a été mise en œuvre par rapport à l'application sur le dispositif et au niveau de l'autre dispositif ;
le fait de déterminer (606), par le dispositif et en fonction de la synchronisation, que le nombre de fois que l'action d'utilisateur prédéfinie a été mise en œuvre par rapport à l'application sur le dispositif et au niveau de l'autre dispositif respecte la condition ; et
en réponse (608) à la détermination,
la récupération du message dans la mémoire locale du dispositif, et
l'affichage, au niveau du dispositif, du message en association avec l'application ; et après l'affichage,
l'effacement du message de la mémoire locale du dispositif, et
l'envoi, au serveur, d'une indication selon laquelle le message a été affiché au niveau du dispositif,
après l'envoi de l'indication au serveur, le serveur envoie une notification à l'autre dispositif associé au compte d'utilisateur pour : (i) supprimer le message lorsqu'il est stocké localement sur l'autre dispositif, et/ou (ii) modifier la règle pour indiquer que le message ne doit pas être affiché sur l'autre dispositif.

2. Procédé selon la revendication 1, comprenant en outre la conservation du comptage du nombre de fois que l'action d'utilisateur prédéfinie a été mise en œuvre sur l'ensemble de multiples exécutions de l'application.

3. Procédé selon la revendication 1, dans lequel la condition comporte en outre une séquence prédéterminée d'actions d'utilisateur à mettre en œuvre avant l'affichage du message.

4. Procédé selon la revendication 1, dans lequel le message se rapporte à une suggestion d'une fonctionnalité ou d'un contenu de l'application auquel un utilisateur de l'application peut donner suite, la fonctionnalité ou le contenu se rapportant à l'action d'utilisateur prédéfinie.

5. Procédé selon la revendication 1, dans lequel la récupération et l'affichage sont en outre en réponse au fait de déterminer qu'une seconde règle est respectée, la seconde règle étant indépendante de l'action d'utilisateur prédéfinie.

6. Procédé selon la revendication 5, dans lequel la seconde règle définit une limite d'un nombre de messages à afficher par rapport à l'application sur un laps de temps donné.

7. Procédé selon la revendication 1, comprenant en outre :
l'envoi, au serveur, d'une indication de l'action d'utilisateur prédéfinie mise en œuvre par rapport à l'application, pour une évaluation côté serveur dans la détermination d'une seconde règle spécifiant une seconde condition à respecter avant l'affichage d'un second message en association avec l'application, la seconde condition correspondant à une seconde interaction d'utilisateur par rapport à l'application.

8. Procédé selon la revendication 1, comprenant en outre :
la demande d'un contenu associé au message en fonction du fait de déterminer que l'action d'utilisateur prédéfinie mise en œuvre par rapport à l'application a respecté une partie prédéfinie de la condition correspondant à l'interaction d'utilisateur ; et
la réception du contenu en fonction de la demande.

9. Procédé selon la revendication 1, dans lequel le message est affiché en tant qu'au moins l'un parmi une bannière, une fenêtre ou en plein écran.

10. Dispositif comprenant :
au moins un processeur ; et
une mémoire comportant des instructions qui, lorsqu'elles sont exécutées par l'au moins un processeur, amènent l'au moins un processeur à mettre en œuvre le procédé selon l'une quelconque des revendications 1 à 9.

11. Dispositif selon la revendication 10, dans lequel le message correspond à un nouveau message ou à une mise à jour apportée à un message antérieur.

12. Dispositif selon la revendication 10, dans lequel les instructions, lorsqu'elles sont exécutées par l'au moins un processeur, amènent en outre l'au moins un processeur, avant réception du message et de la règle, à :
recevoir, en provenance du serveur et en fonction d'une opération de poussée côté serveur, une indication du message ;
envoyer, au serveur et en réponse à l'indication, une demande pour le message.

13. Produit-programme informatique comprenant un code, stocké dans un support de stockage non transitoire lisible par ordinateur, le code comprenant un code pour mettre en œuvre le procédé selon l'une quelconque des revendications 1 à 9.
